## Europäisches Patentamt

## European Patent Office

## Office européen des brevets

(11) Publication number: **0 109 676**
**B1**

## (12) EUROPEAN PATENT SPECIFICATION

(45) Date of publication of patent specification: **20.04.88**

(51) Int. Cl.⁴: **C 09 K 11/77**

(21) Application number: **83111549.8**

(22) Date of filing: **18.11.83**

(54) **Color projection type video device.**

(30) Priority: **18.11.82 JP 201159/82**

(43) Date of publication of application:
**30.05.84 Bulletin 84/22**

(45) Publication of the grant of the patent:
**20.04.88 Bulletin 88/16**

(84) Designated Contracting States:
**DE FR GB NL**

(56) References cited:
**FR-A-2 021 397**
**FR-A-2 021 398**
**FR-A-2 307 029**
**FR-A-2 440 394**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Tsuda, Nobuyuki**
**c/o Tokyo Shibaura Denki K.K. 72, Horikawa-cho**
**Saiwai-ku Kawasaki-shi Kanagawa-ken (JP)**
Inventor: **Tamatani, Masaaki**
**c/o Tokyo Shibaura Denki K.K. 72, Horikawa-cho**
**Saiwai-ku Kawasaki-shi Kanagawa-ken (JP)**
Inventor: **Ajiro, Sakae**
**c/o Tokyo Shibaura Denki K.K. 72, Horikawa-cho**
**Saiwai-ku Kawasaki-shi Kanagawa-ken (JP)**
Inventor: **Nagai, Hitoshi**
**c/o Tokyo Shibaura Denki K.K. 72, Horikawa-cho**
**Saiwai-ku Kawasaki-shi Kanagawa-ken (JP)**

(74) Representative: **Hansen, Bernd, Dr.rer.nat. et ai**
**Hoffmann, Eitle & Partner Patentanwälte**
**Arabellastrasse 4**
**D-8000 München 81 (DE)**

Courier Press, Leamington Spa, England.

**Description**

Background of the invention

This invention relates to a projection type video device which enlarges the pictures on the three high-luminance cathode-ray tubes emitting red, blue and green colors and projecting them onto a large screen to reproduce color images thereon.

At present, there are commercially available projection type video devices in which three high-luminance cathode-ray tubes emitting blue, green and red colors are juxtaposed, and the pictures on these tubes are enlarged by optical lenses and projected onto a large screen to reproduce color images thereon. This video device has heretofore frequently been used for reproduction of television pictures for educational and amusement purposes, and it is expected in the future to be broadened in scope of applications as high definition and high resolution picture screens will be used in television broadcasting or video system. In this projection type video device, in order to make the brightness on the large screen as high as possible, it is required to apply an electron beam energy of tenfold or more, as compared with a conventional direct-view type color cathode-ray, onto the luminescent screen of the above cathode-ray tube. Accordingly, the temperature on the luminescent screen is elevated to 60°C or higher by ordinary operation. Generally speaking, the brightness on the luminescent screen is known to be lowered as the temperature is elevated. Further, the efficiency on the luminescent screen is generally lowered under high density electron beam, with the spot size of electron beam on the cathode-ray tube being about 1/5 of that of the direct-view type color cathode-ray tube for obtaining clear images on the enlarged picture screen. Therefore, it is commonly accepted that considerations different from those to the direct-view type cathode-ray tube should be paid to the cathode-ray tube for the projection type cathode-ray tube with respect to the structure of the luminescent screen and the phosphor constituting the luminescent screen.

For example, a cathode-ray tube is known, in which a means for suppressing temperature elevation of the phosphor by making a structure capable of holding water layer on the outside of the luminescent screen of the cathode-ray tube is used. Forced air cooling by blasting the air against the outside of the luminescent screen of the cathode-ray tube by means of a fan is also known. However, according to these methods, there are involved the drawbacks such that the structure of the cathode-ray tube becomes complicated or that the production cost is liable to be increased, and therefore it has been demanded to employ a phosphor having efficiency as good as possible under practical operation (without use of special means as mentioned above).

Meanwhile, as the red phosphor which is the phosphor constituting one luminescent screen, europium activated yttrium oxide has been used because yttrium oxysulfide frequently used in the direct-view type cathode-ray tube is markedly lowered in emission efficiency because of the temperature elevation. On the other hand, for the blue phosphor, silver-activated zinc sulfide having high emission efficiency is used. Further, for the green phosphor, because a zinc sulfide type phosphor frequently used in the direct-view type color cathode-ray tube is markedly lowered in emission efficiency under the high electron beam energy density, manganese-activated zinc silicate or terbium-activated gadolinium oxysulfide has been employed.

Referring now to reproduction of white picture on the projected screen, about 70 percent of its luminance is obtained from the green color. Therefore, among the red, blue and green emitting phosphors, improvement of emission efficiency particularly of the green emitting phosphor will lead to a high luminance projection type video device. Whereas, manganese-activated zinc silicate used for the green emitting phosphor of the prior art is as low as about 7% in energy emission efficiency by electron beam excitation and suffers from the drawback of being susceptible to luminescent screen deterioration which is the so called "burning". On the other hand, terbium-activated gadolinium oxysulfide, while it is more preferable than the above phosphor with respect to the emission efficiency which is 10% or more, has the drawback of marked lowering of efficiency due to temperature elevation. Therefore, in the conventional projection type video device, under ordinary operation, only comparable brightness was obtained irrespective of whether manganese-activated zinc silicate may be employed or terbium-activated gadolinium oxysulfide may be employed. Further, due to efficiency lowering on account of temperature elevation, the color image when using terbium-activated gadolinium oxysulfide tends to be hued with red, accompanied by the initial temperature elevation of the cathode-ray tubes during about 10 minutes after commencement of picture projection, whereby readjustment is required to be performed to make operations very cumbersome and lower the commercial value of the device.

In addition to the high emission efficiency at high temperatures, the following conditions are also necessary in view of the color image reproduction comparable to that of the direct-view type color cathode-ray tube. As the emitted light from a green phosphor is greater in value $x$ and smaller in value $y$ in the CIE chromaticity diagram, namely more intensified in yellowish hue, the sum of the electron beam energy of blue, green and red cathode-ray tubes becomes smaller when constituting a white picture, whereby the emission efficiency of the video device as a whole is enhanced. On the other hand, for broadening the reproduction range of pictures, the emitted light is desired to be as near to the edge (i.e., great in saturation degree of color) on the chromaticity diagram as possible. From the above point of view, in the direct-view type color cathode-ray tube, the green component emission is selected so as to exhibit a chromaticity of $0.30 < x < 0.34$ and $0.57 < y$. Meanwhile, in a projection type, the emitted color of the green

2

phosphor comprising manganese-activated zinc silicate is x=0.23 and y=0.69 to be strongly hued with green, whereby the emission efficiency of the video device as a whole will be lowered. Also, in the case of the phosphor with the use of terbium-activated gadolinium oxysulfide, its emitted color is x=0.325 and y=0.543, thus involving the drawback of lower degree of saturation (purity).

Moreover, the above manganese-activated zinc silicate phosphor has the drawback of being poorly practically applicable, because the light decay time after cessation of elevation beam excitation is long and therefore the moving pictures tend to be tailed.

Other than the green phosphors described above, terbium-activated rare earth oxyhalide phosphor is known as the phosphor exhibiting high efficiency by electron beam excitation. This phosphor is disclosed in the paper in Philips Research Report, Vol. 22, page 481, published in 1967. What is disclosed in this paper is to incorporate terbium as the activating agent into lanthanum oxybromide, lanthanum oxychloride, lanthanum oxyfluoride, yttrium oxyfluoride, yttrium oxychloride and yttrium oxybromide to cause the emission by electron beam excitation.

The present inventors tried to apply lanthanum oxybromide chosen from the above phosphors for a color display projection type video device, but could not accomplish the desired object. That is, the emitted color was x=0.35 and y=0.57 on the CIE chromaticity diagram, and the color display in the above case became overly yellowish, which was not suitable for the green color required in the present invention. Also, when applied for the projection type, overheating (to 80°C or higher) of its luminescent screen will abruptly result in lowering of emission efficiency. Further, the material constituting the above phosphor is chemically unstable and therefore it has been found that undesirable flow is formed during the process of applying this material on the luminescent screen, whereby it is difficult to form uniform coating.

Among the above phosphors, concerning particularly lanthanum and gadolinium oxyhalides, J. G. Rabatin discloses in Japanese Patent Publication No. 34310/1974 that good results could be obtained by applying these materials on the luminescent screen of X-ray image converter through utilization of high efficiency under X-ray excitation possessed by these materials. Particularly, the lanthanum oxybromide phosphor is stated to give the highest emission efficiency by X-ray excitation and suitable for X-ray sensitizing screen. Further, there is a disclosure that the above bromide phosphor shows also effective emission efficiency and good high temperature characteristic even by electron beam excitation (see The Extended Abstract No. 306 in the Annual Meeting of American Society of Electrochemistry, in Autumn, 1979). There is also a disclosure that it can be utilized for a monochromatic video (emitted color becomes white at low terbium concentration) to give good results (see The Extended Abstract No. 153 in the Annual Meeting of American Society of Electrochemistry, in Spring, 1981).

However, as is apparent from the above description, in the lanthanum oxybromide phosphor, it has been found that the desired object cannot be accomplished in a color display projection type video device.

The present inventors, since the bromide phosphor proved to be inapplicable for the color display projection type video device for the reason as mentioned above, have made further study on rare earth oxyhalide phosphors and consequently found that a phosphor made of terbium-activated lanthanum oxychloride can be applied for the color projection type video device of the present invention.

As for the yttrium oxychloride which is stated to have high luminance and high efficiency, it was confirmed to be chemically unstable and poorly unpractical due to difficulty in formation of the luminescent screen. On the other hand, a fluoride type phosphor was also found to be impractical, because it causes reaction with a quartz crucible during phosphor firing process, whereby purity is lowered or mass-productive phosphor preparation becomes difficult.

Summary of the invention

The present inventors, in view of the above points, have made thorough researches particularly about the green phosphor for the color projection type video device and consequently found a phosphor excellent in high temperature characteristics. This green phosphor is a terbium-activated lanthanum oxychloride, which is employed to be actually mounted together with a red emitting phosphor and a blue emitting phosphor on a projection type video device.

Accordingly, this invention is a color projection type video device comprising a combination of three cathode-ray tubes having emitting screens for red, green and blue colors, which comprises a green emitting luminous screen formed by use of a terbium-activated lanthanum oxychloride phosphor.

Brief description of the drawings

Fig. 1 shows a side elevational view of a cathode-ray tube;
Fig. 2 a schematic illustration of the device;
Fig. 3, Fig. 4 and Fig. 5 characteristic curves; and
Fig. 6 a CIE chromaticity characteristic diagram showing the emission chromaticity region.

Description of the preferred embodiments

The above-mentioned green phosphor holds its emission color at x=0.33 and y=0.59 by selecting appropriately the amount of terbium added and can sufficiently be utilized as the green color for color display. More specifically, when a cathode-ray tube for green color display undertaking a part of the projection device was prepared by coating of the green phosphor and subjected to the forced aging test by applying a voltage to the cathode-ray tube while controlling the temperature on the luminescent screen to about 100°C to measure the emission luminance and the emission efficiency, it was confirmed, as a result, that the initial characteristics were maintained even after 1000 hours without any deterioration observed. This phosphor is further free from occurrence of undesirable flow during the phosphor screen preparation process of the cathode-ray tube and therefore there is the advantage that formation of the phosphor screen is possible by using the settling method, whereby manufacturing is very easy. Also, as for the afterglow characteristic, light decay time is about 2 milliseconds (10% afterglow) which can sufficiently accomplish the objects of the invention.

As is apparent from the above description, it is particularly important to select a specific substance from among the rare earth oxyhalide phosphors. In other words, it is necessary for constituting the color projection type video device of the present invention to satisfy sufficiently the severe conditions as mentioned below. These conditions are (1) that color reproducibility area should be large from the aspect of color display (from the aspect of color synthesis with red color and blue color), (2) that there should be no lowering of emission efficiency at high temperatures (60°C or higher), (3) that the phosphor should have high luminance characteristic, (4) that the color change with lapse of time should be small, (5) that chemical stability should be high, (6) that preparation should be excellently easy and (7) that the afterglow characteristic should be excellent.

The above conditions are satisfied by use of a lanthanum oxychloride phosphor.

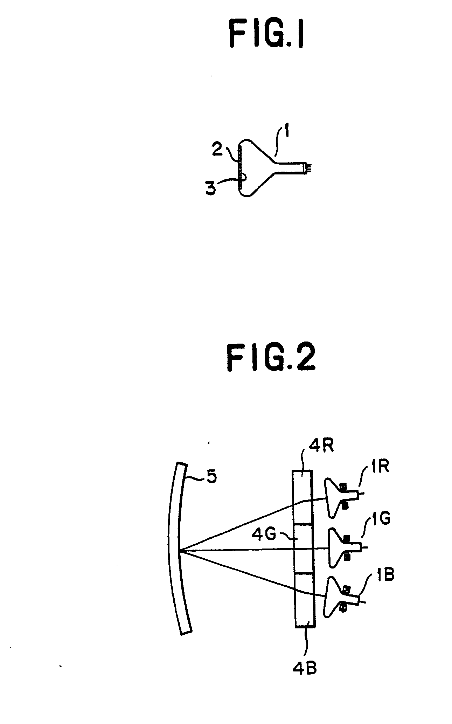

The green emitting luminous screen is formed by settling on the inner surface thereof the terbium-activated lanthanum oxychloride phosphor in a settling solution comprising water glass and an aqueous barium nitrate solution. When the weight concentration of water glass ($K_2O_1 \cdot 3SiO_2$) is represented by WG and that of barium nitrate ($Ba(NO_3)_2$) by Ba, the ratio of WG/Ba is controlled to 20 to 35, because adhesion force of the luminescent screen to the cathode-ray tube face glass will be extremely lowered to cause peel-off phenomenon if it exceeds 35, while at a level lower than 20, the settling solution will become itself turbid to give no desired phosphor screen. Thus, as shown in Fig. 1, on the internal surface of the face 2 of the cathode-ray tube 1 is formed the green emitting phosphor screen 3 according to a settling method.

As the next step, by using an europium-activated yttrium oxide ($Y_2O_3$:Eu) as the red emitting phosphor, the red phosphor screen 3 is formed on the internal surface of the face 2 according to a conventional means, as shown in Fig. 1.

Further, by using a silver-activated zinc sulfide (ZnS:Ag) as the blue emitting phosphor, the blue phosphor screen 3 is formed similarly as the above phosphor screen for emitting red light.

The color projection type video device is constituted by arranging the cathode-ray tubes 1R, 1G and 1B having red, green and blue emitting phosphor screens thus formed, respectively, juxtaposed with one another as shown in Fig. 2, providing in front of them (on the face side) lenses for adjustment 4R, 4G and 4B and controlling the lights radiated from the respective luminescent screens to be focused on a screen 5 provided at a predetermined distance apart from the cathode-ray tubes.

To each of the above cathode-ray tubes 1R, 1G and 1B is applied an operation voltage of about 28 KV, by which an electron beam is emitted against the luminescent screen to produce luminescence. Temperature of the cathode-ray tubes reaches 60 to 80°C in about 10 minutes after commencement of the operation. The green emitting phosphor screen 3 showed no substantial decrease in emission efficiency even at about 80°C, and the emission luminance was twofold as compared with that of the prior art. Also, substantially no decrease in luminance occurred in the red emitting phosphor screen and the blue emitting phosphor screen at high temperatures. Therefore, substantially no color change in the projected TV pictures was observed with lapse of time. Moreover, as apparently seen from the chromaticity diagram as mentioned above, the device of the present invention has a specific feature in that reproducibility of color can be enlarged to a great extent. In particular, this green-emitting luminescent screen was found to exhibit a peculiar characteristic that the emission efficiency is rather increased when the spot size of the electron beam is made smaller, which is advantageous in obtaining TV pictures of high quality.

Examples 1 to 6

For the red emitting phosphor, an europium-activated yttrium oxide ($Y_2O_3$:Eu) was employed, and for the blue emitting phosphor, a silver-activated zinc sulfide (ZnS:Ag) was employed to form respective emitting cathode-ray tubes. For the green emitting phosphor, 100 g of lanthanum oxide, 58 g of ammonium chloride and 14 g of terbium oxide were weighed and mixed thoroughly with each other. The mixture was put in a quartz crucible, an appropriate amount of carbon was placed on the mixture and a lid was used to cover over the crucible, followed by calcination at 1200°C for 2 hours. When no carbon is placed, calcination is effected in a reducing atmosphere. The calcined product was put into a bag of nylon mesh, subjected to screening in water, thoroughly washed with water, filtered by use of alcohol and dried to prepare a terbium-activated lanthanum oxychloride, which was provided for use.

Next, 1.0 g of the above green emitting phosphor was suspended in an aqueous solution prepared by making up pure water and 25% water glass to a total amount of 200 ml to prepare a phosphor suspension. Into a 17,8 cm (7 inch) cathode-ray tube was added a mixture made up to a total amount of 400 ml of 2% barium nitrate solution and pure water, followed by stationary standing, and the above suspension was poured thereinto, followed by stationary standing for 30 minutes. After the phosphor was settled to form a screen, the supernatant was decanted to obtain a luminescent screen. The amounts of the 25% water glass added, the amounts of the 2% barium nitrate, the concentration ratio of water glass to barium WG/Ba containing in the aqueous solution during the above settling process, the transparency degrees of the settling solutions, the appearance of the resultant settled screens and luminances of the cathode-ray tubes prepared via the processes as hereinafter described are shown in Table 1 as Examples 1 to 6. In Examples 1 to 6, within the range of 20<WG/Ba<35, the settling solutions are transparent and phosphor screens are formed without flowing. But, in Comparative Examples 1 to 5, wherein WG/Ba is outside the above range, no good phosphor screens were formed. In Table 1, good products are indicated by [A], bad products by [C] and products grouped therebetween by [B].

TABLE 1

| Cathode-ray tube used in Examples | 25% water glass (ml) | 2% barium nitrate (ml) | WG/Ba | Transparency degree of settling solution | Phosphor screen | Relative luminance |
|---|---|---|---|---|---|---|
| Green phosphor screen (Example 1) | 50 | 20 | 31.3 | [A] | [A] | 100 |
| (Example 2) | 40 | 15 | 33.3 | [A] | [A] | 98 |
| (Example 3) | 30 | 15 | 25.0 | [A] | [A] | 100 |
| (Example 4) | 60 | 30 | 25.0 | [A] | [A] | 100 |
| (Example 5) | 70 | 40 | 21.9 | [A] | [A] | 97 |
| (Example 6) | 50 | 30 | 20.8 | [A] | [A] | 95 |
| Comparative Example 1 | 30 | 10 | 37.5 | [A] | [C] | |
| 2 | 30 | 20 | 18.8 | [B] | [A] | |
| 3 | 45 | 30 | 18.8 | [C] | [B] | |
| 4 | 70 | 20 | 43.8 | [A] | [C] | |
| 5 | 50 | 40 | 15.6 | [C] | [C] | |

These phosphors were found to be better dispersed in settling solutions than zinc silicate or gadolinium oxysulfide phosphors of the prior art, and better luminescent screens were obtained when compared on the same level of particle sizes.

On each of the luminescent screens obtained was formed an organic material film by using the lacquer filming method, and further aluminum film was vapor-deposited, followed by baking, and thereafter an electron gun was mounted to complete a cathode-ray tube. The relative values of the cathode-ray tube luminances are shown also in Table 1. Some scatterings are observed in the cathode-ray tube luminances, but they were confirmed to be caused by the scatterings in the so-called "dead voltage" which occurs during preparation of phosphor and cathode-ray tube. That is, the "dead voltage" of the settled screen is in the range from 3.7 kV to 4.5 kV, and the difference of 0.8 kV will not appear as a great difference during operation by 28 kV. On the other hand, the increase of "dead voltage" by baking was found to be 0.2 KV, which was negligible so far as the cathode-ray luminance was concerned.

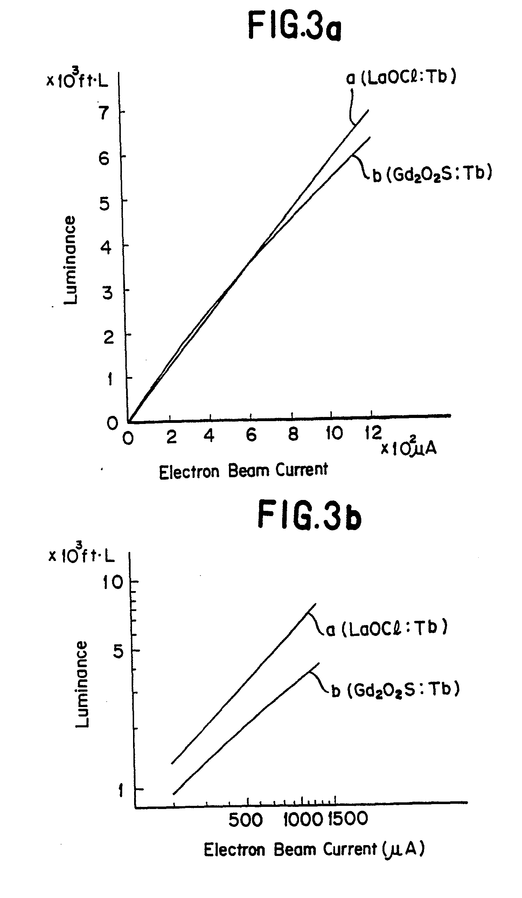

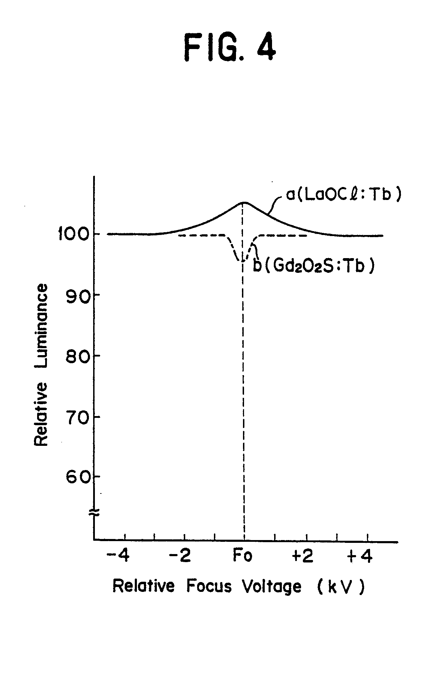

The luminance obtained from the cathode-ray tube of the green luminescent screen 3 used in Examples by an accelerating voltage of 28 kV at room temperature and 80°C each was plotted versus the current applied to obtain the curve *a* as shown in Fig. 3a and Fig. 3b, respectively. Even at an electron beam current of 600 μA or higher, the emission luminance is increased in proportion to the electron beam current, thus indicating clearly that the phosphor is very suitable for the color projection type video device of the present invention. Further, Fig. 4 shows the relative luminance when the electron beam size was varied. The electron beam size was varied here by varying the voltage supplied to the focus grid in the cathode-ray tube, and it becomes minimum at the relative focus voltage of 0 kV, being increased at voltages toward both positive and negative directions. While it is generally known in the ordinary phosphors that luminance is lowered at the minimum beam size, the terbium-activated lanthanum oxychloride exhibits the luminance maximum at the minimum beam size as shown by the curve *a* in Fig. 4 is advantageous for producing an image of small electron beam size and of high quality. For comparison, the curve of the cathode-ray tube employing a terbium-activated gadolinium oxysulfide phosphor as the luminescent screen is shown by the curve *b* in each of Figs. 3a, 3b and 4.

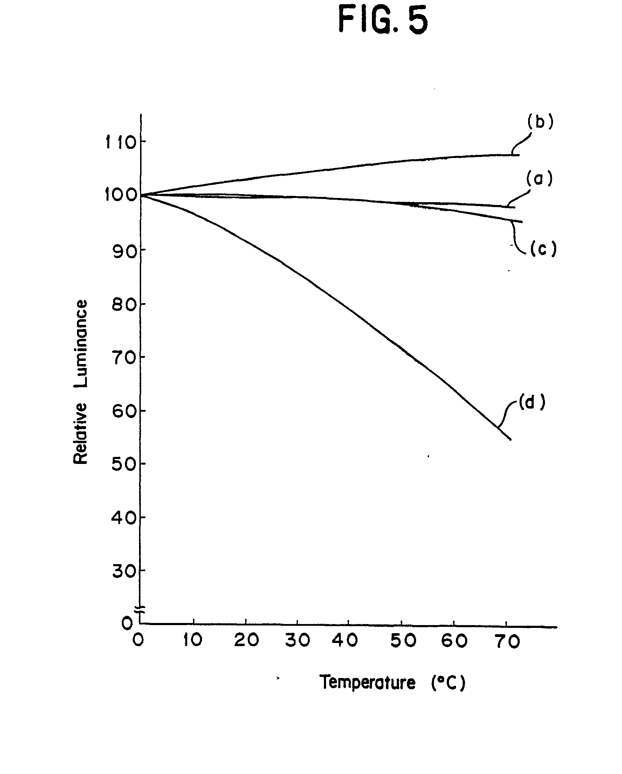

Fig. 5 shows the relation of the emission luminance versus temperature rising on the face of the above green, blue and red emitting cathode-ray tubes, the curve (a) representing the relative luminance of the emitted color of green, the curve (b) that of blue and the curve (c) that of red, respectively. The temperature during steady state usage is 70 to 80°C (Temperature rising is 50 to 60°C). As apparently seen from the luminance characteristics, they are substantially approximate to each other with the phosphor (a) of green emission as the center, and very stable luminances are obtained at temperature rising on the face of 70°C or higher. Therefore, stable color pictures which are synthesized by respective color pictures on the cathode-ray tubes can be obtained without color (hue) change during temperature variation.

On the other hand, the curve (d) shows the luminance characteristics of the terbium-activated' gadolinium oxysulfide phosphor (green emitting phosphor of the prior art), and the relative luminance was lowered to about 60 at the temperature rising of about 70°C on the face in the color projection type video device of the present invention.

Other than the red emitting phosphor as described above, it is also possible to use the following phosphors: $CaS:Eu$, $YVO_4:Eu$.

Also, as for the blue emitting phosphor, the following phosphors may be available: $Cas:Bi$, $SrS$ $Ga_2S_3:Ce$.

Table 2 shows the luminance of the green emission obtained when operating the 17.8 cm (7 inch) cathode-ray tube of Catalogue No. E2884 produced by Toshiba Corporation under the input conditions of 28 kV and 1200 µA (raster size 13×10 cm), as compared with two kinds of Comparative Examples. Comparative Example 1 is a cathode-ray tube of terbium-activated gadolinium oxysulfide, and Comparative Example 2 is a cathode-ray tube with a structure in which the luminescent screen of the cathode-ray tube of Comparative Example 1 is forced to be cooled by means of a fan.

TABLE 2
(footlambert)

| Comparative Example 1 | Comparative Example 2 | Cathode-ray tube used in this invention |
|---|---|---|
| 3500 | 6200 | 6850 |

As is apparently seen from this Table, the green emitting cathode-ray tube used in the device of the present invention becomes brighter by 96% as compared with the Comparative Example 1 which is used without cooling of the cathode-ray tube and by 10% as compared with the cathode-ray tube having a cooling structure.

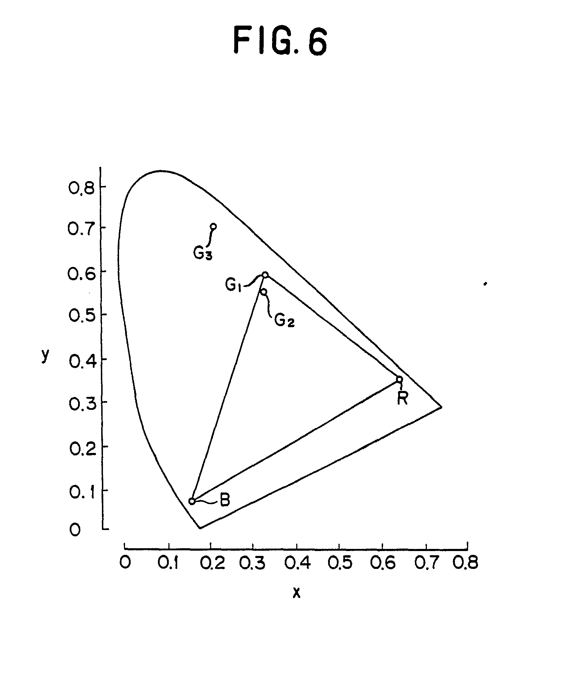

Fig. 6 shows the emitted chromaticity point of the cathode-ray tube of Example 3 when measured under the conditions of 28 kV and 1200 µA by $G_1$ (x=0.329, y=0.589) on the chromaticity diagram. For comparison, $G_2$ shows the chromaticity point of terbium-activated gadolinium oxysulfide (x=0.325, y=0.543) and $G_3$ that of manganese-activated zinc silicate (x=0.212, y=0.701). From this diagram, it can be seen that $G_1$ is nearer to the green color region of the direct-view type color cathode-ray tube to be advantageous in displaying white picture and also broader in color reproducing region than $G_2$.

When this cathode-ray tube was mounted on the projection type video device and visually evaluated, the focusing on the projected screen was good, with brighter color pictures as compared with those of the prior art, and it proved to have an advantage of beautiful green color. Further, due to small extent of burning of the cathode-ray tube or small lowering in green emitting component by temperature elevation, there occurred no color change in projected pictures with lapse of time.

**Claims**

1. A color projection type video device comprising a combination of three cathode-ray tubes having emitting screens for red, green and blue colors, which comprises a green emitting luminous screen formed by use of a terbium-activated lanthanum oxychloride phosphor.

2. A method for forming the green emitting luminous screen in a color projection type video device according to claim 1, characterized in that on the inner surface of a screen terbium-activated lanthanum oxychloride phosphor suspended in a settling solution comprising water glass and an aqueous barium nitrate solution, the weight concentration ratio WG/Ba of the water glass to barium nitrate in the settling solution being in the range from 20 to 35, is deposited by settling to form the green emitting luminous screen.

**Patentansprüche**

1. Videogerät zur Farbprojektion mit einer Kombination von drei Kathodenstrahlröhren, die abstrahlende Bildschirme für die Farben rot, grün und blau haben, das einen grünabstrahlenden Bildschirm umfaßt, der unter Einsatz von Terbium-aktiviertem Lanthanoxychlorid-Leuchtstoff hergestellt wird.

2. Verfahren zur Herstellung des grünabstrahlenden leuchtenden Bildschirms in einem Videogerät zur Farbprojektion gemäß Anspruch 1, dadurch gekennzeichnet, daß auf der inneren Oberfläche eines Schirms der Terbiumaktivierte Lanthanoxychlorid-Leuchtstoff suspendiert in einer Absetzlösung, die Wasserglas und eine wässrige Bariumnitrat-Lösung enthält, wobei die Gewichtskonzentration WG/Ba von Wasserglas zu Bariumnitrat in der Absetzlösung im Bereich zwischen 20 und 35 liegt, durch Absetzung unter Ausbildung des grünabstrahlenden leuchtenden Bildschirm abgelagert wird.

**Revendications**

1. Dispositif vidéo du type à projection en couleurs comprenant une combinaison de trois tubes à rayons cathodiques ayant des écrans émetteurs pour les couleurs rouge, verte et bleue, qui comprend un écran luminescent émettant le vert formé par l'emploi d'un phoshor d'oxychlorure de lanthane activé au terbium.

2. Procédé pour la formation de l'écran luminescent émettant le vert dans un dispositif vidéo du type à projection en couleurs selon la revendication 1, caractérisé en ce que sur la surface intérieure d'un écran, on dépose par sédimentation, pour former l'écran luminescent émettant le vert, un phosphor d'oxychlorure de lanthane activé au terbium, mis en suspension dans une solution de sédimentation comprenant du verre soluble et une solution aqueuse de nitrate de baryum, le rapport en concentration pondérale VS/Ba du verre soluble au nitrate de baryum dans la solution de sédimentation étant compris dans l'intervalle allant de 20 à 35.

# FIG.I

# FIG.2

# FIG.3a

x10³ ft·L

Luminance

a (LaOCℓ:Tb)

b (Gd₂O₂S:Tb)

7

6

5

4

3

2

1

0

0   2   4   6   8   10  12   x10² μA

Electron Beam Current

# FIG.3b

x10³ ft·L

Luminance

10

5

1

a (LaOCℓ:Tb)

b (Gd₂O₂S:Tb)

500  1000 1500

Electron Beam Current (μA)

# FIG. 4

Graph: Relative Luminance versus Relative Focus Voltage (kV). Curve a (LaOCℓ:Tb) peaks above 100 near Fo; curve b (Gd$_2$O$_2$S:Tb) dips below 100 near Fo.

**0 109 676**

# FIG. 5

4

# FIG. 6